# EUROPÄISCHE PATENTANMELDUNG

(11) **EP 2 938 047 A1**
(43) Veröffentlichungstag der Anmeldung: **28.10.2015**
(21) Anmeldenummer: 15001161.7
(22) Anmeldetag: 20.04.2015
(51) Int. Cl.: H04L 29/08

(54) **VERFAHREN, VORRICHTUNG, COMPUTERPROGRAMM, SOFTWAREPRODUKT UND DIGITALES SPEICHERMEDIUM ZUR ÜBERMITTLUNG UND ADAPTION VON DATEN**

(30) Priorität: 25.04.2014 DE 102014006038
(71) Anmelder: Unify GmbH & Co. KG, 81379 München (DE)
(72) Erfinder: Totzke, Jürgen, 85586 Poing (DE); Klug, Karl, 83714 Miesbach (DE); Müller, Paul, 67705 Trippstadt (DE); Fleuren, Tino, 67697 Otterberg (DE); Götze, Joachim, 67663 Kaiserslautern (DE); Steinmetz, Ralf, 64342 Seeheim-Jugenheim (DE); Papageorgiou, Apostolos, 69117 Heidelberg (DE); Lampe, Ulrich, 60326 Frankfurt (DE); Tran-GIA, Phuoc, 97076 Würzburg (DE); Zitterbart, Martina, 76344 Eggenstein (DE); Rathgeb, Erwin, 42555 Velbert (DE); Wolisz, Adam, 12161 Berlin (DE)
(74) Vertreter: Fritzsche, Thomas

(57) **Zusammenfassung**

Die Erfindung betrifft ein Verfahren, eine Vorrichtung, ein Computerprogramm, ein Softwareprodukt und ein digitales Speichermedium zur Übermittlung und Adaption von Daten, insbesondere Mediendaten, Multimediadaten und/oder Echtzeitkommunikationsdaten, unter Beteiligung eines mobilen Endgeräts, mit den Schritten: a) Erzeugen von generischen Anforderungsdokumenten; b) Erzeugen einer Menge von geeigneten Kommunikationsmustern auf der Grundlage der generischen Anforderungsdokumenten; c) Ermitteln aktuell verfügbarer Transportmöglichkeiten und deren Dienstgütequalität über wenigstens ein Kommunikationsnetz; d) Auswählen eines Kommunikationsmusters aus der Menge von geeigneten Kommunikationsmustern auf der Grundlage der Netzübertragungsgüte/-n des wenigstens einen Kommunikationsnetzes, wobei das Verfahren eine erste funktionale Schicht und eine zweite funktionale Schicht nutzt, die zwischen einer Software-Anwendungsschicht und einer Netzzugangsschicht integriert werden und jeweils voneinander unabhängige Eingangsdokumente erhalten, wobei die Eingangsdokumente der zweiten funktionalen Schicht transportbezogene Informationen enthalten, während die Eingangsdokumente der ersten funktionalen Schicht anwendungsbezogene Informationen enthalten.

## Beschreibung

Die Erfindung betrifft ein Verfahren, eine Vorrichtung und ein System zur Übermittlung und Adaption von Daten sowie ein diesbezügliches Computerprogramm, Softwareprodukt und Digitales Speichermedium.

Im letzten Jahrzehnt sind mobile Geräte, mobile Anwendungen und ist mobile Kommunikation im Allgemeinen ein allgegenwärtiger Teil der persönlichen und geschäftlichen Lebensführung geworden. Allerdings greifen viele mobile Anwendungen - wie etwa die zunehmend beliebten "Apps" auf modernen "Smartphones" - üblicherweise auf eine konstante Netzkonnektivität zurück, um beispielsweise ein Video-Streaming durchzuführen.

Ungeachtet beträchtlicher Aufwendungen durch Telekommunikationsanbieter in den vergangenen Jahren, die sich in hohen finanziellen Investitionen in die zelluläre Infrastruktur niedergeschlagen haben, ist die Abdeckung mobiler Netze nach wie vor weit davon entfernt, perfekt zu sein. Ein schlechter Empfang, der vollständige Verlust der Konnektivität oder eine verminderte Bandbreite sind bekannte Probleme, wenn man beispielsweise mit der Bahn reist, entfernte Gebiete besucht oder sich an stark frequentierten Orten wie etwa in Konferenzen oder auf Messen aufhält. Es sind bereits in vielen Situationen alternative Netze verfügbar, die ausgenutzt werden können, um wenigstens eine gewisse Funktionalität in mobilen Anwendungen aufrechtzuerhalten.

Heutzutage muss eine Anwendung seine Transportkapazitätsanforderungen für sich selbst besorgen, indem sie die geeigneten Netzzugangspunkte auswählt und implementiert, z. B. indem sie eine entsprechende Sockelschnittstelle (Socket-Schnittstelle bzw. Socket Interface) verwendet und parametrisiert. Zusätzlich muss jedwede Anforderung, die über reinen Transport hinausgeht, wie etwa Handhabung eines Verbindungsverlusts oder allgemeine Anpassung übertragenen Inhalts hinsichtlich verfügbarer Netzqualität, durch jede Anwendung individuell gehandhabt werden. Gegenwärtige Forschung in dem Bereich des sogenannten "Internet der Zukunft" (Future Internet), die sich unter anderen auf diese Themen richtet, teilt sich in zwei Hauptrichtungen, die sich einerseits auf die Netzebene und andererseits auf die Anwendungsebene konzentrieren.

Auf der Netzebene haben sich erste Schritte hin zu einer Adaption von Transportfähigkeiten auf die Zusammenstellung von Mikroprotokollen zur Laufzeit auf der Grundlage einer Anwendungsanfrage konzentriert, um die Flexibilität in Transportschichtprotokollen zu verbessern. Beispiele hierfür sind unter dem Schlagwort "Dynamische Konfiguration von Protokollen" (Dynamic Configuration of Protocols, DaCaPo) etwa in M. Vogt, T. Plagemann, B. Plattner T. Walter, "A run-time environment for da capo," in Proceedings of INET93 International Networking Conference of the Internet Society, 1993, und unter dem Schlagwort "Funktionsbasiertes Kommunikationssubsystem" (Function Based Communication Subsystem, FCSS) etwa in B. Stiller, "Fukss: Ein funktionsbasiertes Kommunikationssubsystem zur flexiblen Konfiguration von Kommunikationsprotokollen," GI/ITG Fachgruppe Kommunikation und Verteilte Systeme, 1994, beschrieben worden. Später verschob sich der Schwerpunkt hin zu allgemeiner Netzfunktionalität wie etwa die nicht auf Schichten beruhende sog. "Rollenbasierte Architektur" (Role-Based Architecture, RBA) oder die sogenannte "Dienstintegrationssteuerung und -optimierung" (Service Integration Control and Optimization, SILO), die aus wiederverwendbaren Bausteinen, die zu einem Netzwerkprotokoll kombiniert werden können, besteht. Zu RBA sei auf R. Braden, T. Faber, M. Handley, "From protocol stack to protocol heap: role-based architecture," SIGCOMM Comput. Commun. Rev., vol. 33, no. 1, pp. 17-22, 2003, zu SILO auf R. Dutta, G. Rouskas, I. Baldine, A. Bragg, D. Stevenson, "The silo architecture for services integration, control, and optimization for the future internet," in Communications, 2007. ICC '07. IEEE International Conference on Communications, June 2007, pp. 1899-1904 verwiesen. Jüngere Projekte arbeiten am "Funktionalen Netzaufbau" (Network Funktional Composition", um anforderungsorientierte Protokolle, die von verfügbaren Netzfähigkeiten Gebrauch machen, zu definieren, wie etwa die "Automatische Netzarchitektur" (Automatic Network Architecture, ANA), "Dienstorientierte Netzarchitektur" (Service Oriented Network Architecture, SONATE), oder "Netlet-basierte Knotenarchitektur" (Netlet-based Node Architecture, NENA).

Weiterführende Informationen zu diesen Projekten sind etwa in "Autonomic Network Architecture (ANA)", online abgerufen unter: http://www.ana-project.org, B. Reuther, P. Müller, "Future Internet Architecture - A Service Oriented Approach" in it - Information Technology, Vol. 50, no. 6, 2008, Oldenbourg Verlag, Munich, bzw. D. Martin, L. Völker, M. Zitterbart, "A Flexible Framework for Future Internet Design, Assessment, and Operation", Computer Networks, vol. 55, no. 4, pp. 910-918, Mar. 2011 zu finden. Eine genauere Beschreibung der vorstehenden und einiger anderer Projekte ist in C. Henke, A. Siddiqui, R. Khondoker, "Network functional composition: State of the art" in ATNAC'10: Proceedings of Australasian Telecommunication Networks and Application Conference, IEEE, 2010 veröffentlicht worden.

Auf der Anwendungsebene zielt die Forschung am Internet der Zukunft auf intelligente Infrastrukturen und Geschäftsprozesse, d. h., erhöhte Intelligenz und Effizienz durch engere Integration mit Internet-Vernetzung und Rechenkapazitäten. Hierzu wird beispielhaft auf "Digital Agenda for Europe, Future Internet PPP" (online abgerufen unter https://ec.europa.eu/digital-agenda/en/future-internet-public-private-partnership) verwiesen. Dieser Ansatz umfasst intelligente Mechanismen zur Inhaltsadaption hinsichtlich des gegenwärtigen Kontexts, beispielsweise durch Verwenden eines fehlertoleranten Video-Codec für einen Konferenzruf, wenn das Zugangsnetz fehleranfällig ist. Das Projekt FI-WARE, das beispielsweise in "Future Internet Core Platform" (online abgerufen unter http://www.future-internet.eu/home/future-internet-ppp/fi-ware.html) beschrieben ist, führt eine neuartige Infrastruktur zur kosteneffizienten Erzeugung und Verteilung von Diensten, Bereitstellung hoher Qualität von Diensten und Sicherheitsgarantieren, um die Forderungen von wichtigen Marktakteuren quer über viele unterschiedliche Sektoren wie etwa Gesundheits-, Telekommunikations- oder Umweltdiensten hinweg zu erfüllen.

Die Adaption von entweder Netz- oder Anwendungsfähigkeiten erfordert die immer wiederkehrende Kenntnis über die Erfordernisse und die Bedingungen des anderen Teils. Netzbeobachtung auf Anwendungsebene wird durch Ansätze wie etwa RTCP-Rückmeldungen (z. B. über einen Rahmenverlust) implementiert. Auf der Grundlage dieser Rückmeldung adjustieren Echtzeitanwendungen wie etwa Videokonferenzanwendungen den verwendeten Video-Codec bzw. die Codec-Parameter. Allerdings kann es sein, dass ein solcher Mechanismus nicht ausreicht, um anzugeben, warum das aufgedeckte Problem aufgetreten ist (z. B. Überlastung, fehlerhafte Komponenten, etc.), und wie darauf in geeigneter Weise zu reagieren ist. Andererseits werden Anwendungssignaturen innerhalb des Netzes über Mechanismen der Paket-Tiefenanalyse (Deep Packet Inspection-DPI) erkannt. Obschon diese die Trennung unterschiedlicher Anwendungstypen ermöglichen, können sie keine Information über den Anwendungskontext bereitstellen. Die bestehenden Mechanismen ermöglichen Anwendung und Netz, Informationen über den anderen Teil zu erschließen, sie erlauben aber aufgrund der fehlenden Kenntnis über Kontext, Fähigkeiten und genaue Überwachungswerte nur grobkörnige Reaktionen.

Es ist eine Aufgabe der vorliegenden Erfindung, ein Verfahren und eine Vorrichtung sowie ein Computerprogramm, ein Softwareprodukt und ein Digitales Speichermedium anzugeben, die in der Lage sind, die vorstehenden Nachteile im Stand der Technik wenigstens teilweise zu überwinden. **Insbesondere besteht eine Aufgabe der vorliegenden Erfindung darin, ein Verfahren und eine Vorrichtung, ein Computerprogramm, ein Softwareprodukt und ein Digitales Speichermedium anzugeben, die in der Lage sind, eine verbesserte Transportnetzenutzung bereitzustellen, wenn ein oder mehrere Netzkonnektivitäten zur Verfügung stehen. Die Aufgabe stellt sich insbesondere bei der Konnektierung von mobilen Endgeräten.**

Die Aufgabe wird erfindungsgemäß durch die Merkmale der unabhängigen Ansprüche gelöst. Vorteilhafte Ausführungsformen und Weiterentwicklungen der Erfindung sind in den Unteransprüchen angegeben.

Gemäß einem Gesichtspunkt der Erfindung wird ein Verfahren zur Übermittlung und Adaption von Daten, insbesondere Mediendaten, Multimediadaten und/oder Echtzeitkommunikationsdaten, unter Beteiligung eines mobilen Endgeräts vorgeschlagen, mit den Schritten:
a) Erzeugen von generischen Anforderungsdokumenten;
b) Erzeugen einer Menge von geeigneten Kommunikationsmustern auf der Grundlage der generischen Anforderungsdokumenten;
c) Ermitteln aktuell verfügbarer Transportmöglichkeiten und deren Dienstgütequalität über wenigstens ein Kommunikationsnetz;
d) Auswählen eines Kommunikationsmusters aus der Menge von geeigneten Kommunikationsmustern auf der Grundlage der Netzübertragungsgüte/-n des wenigstens einen Kommunikationsnetzes,
wobei das Verfahren eine erste funktionale Schicht und eine zweite funktionale Schicht nutzt, die zwischen einer Software-Anwendungsschicht und einer Netzzugangsschicht integriert werden und jeweils voneinander unabhängige Eingangsdokumente erhalten, wobei die Eingangsdokumente der zweiten funktionalen Schicht transportbezogene Informationen enthalten, während die Eingangsdokumente der ersten funktionalen Schicht anwendungsbezogene Informationen enthalten.

Mediendaten können beispielsweise Audiodaten und/oder Videodaten und/oder Textdaten und/oder Videotextdaten und/oder Konferenzdaten und/oder anwendungsspezifische Daten etc. sein. Multimediadaten können beispielsweise kombinierte Audio/Video-Daten und/oder Konferenzdaten und/oder Präsentationsdaten und/oder Spielsituationsdaten etc. sein. Echtzeitkommunikationsdaten können beispielsweise Telefoniedaten und/oder Videotelefoniedaten und/oder Streaming-Daten etc. sein. Generische Anforderungsdokumente sind im Sinne der Erfindung Anwendung Dokumente, welche die Anforderungen, Randbedingungen und Forderungen etc. beteiligter Ressourcen und Instanzen wie etwa Anwendungen und/oder Transportdiensten und/oder Netzen und/oder Geräten und/oder Politiken beschreiben. Die Anforderungsdokumente können auch als Entscheidungseingangsdokumente verstanden werden. Ein Erzeugen einer Menge von geeigneten Kommunikationsmustern kann ein Identifizieren unter mehreren verfügbaren Kommunikationsmustern und/oder ein Zusammenstellen aus mehreren Teildokumenten (Anforderungsdokumenten) gemäß den Anforderungen, Randbedingungen und Forderungen etc., die in den Anforderungsdokumenten niedergelegt sind, umfassen. Durch das erfindungsgemäße Verfahren kann auch eine optimale Transportnetzenutzung abhängig von mindestens einer aktuell nutzbaren - von gleichzeitig verfügbaren - Netzkonnektivität eines mobilen Geräts verwirklicht werden. Mit den unabhängigen Eingangsdokumenten, die einerseits anwendungsbezogene Informationen und andererseits transportbezogene Informationen enthalten, kann die erste funktionale Schicht als eine inhaltsbewusste Schicht verstanden werden und kann die zweite funktionale Schicht als eine transportbewusste Schicht verstanden werden. Hierbei ist zu verstehen, dass die Funktionalitäten der ersten (inhaltsbewussten) und zweiten (transportbewussten) Schicht möglichst voneinander getrennt zugeordnet werden.

Der Schritt des Auswählens eines Kommunikationsmusters wird gemäß einer bevorzugten Weiterbildung des Verfahrens erneut ausgeführt, wenn festgestellt wird, dass sich die verfügbare Transportmöglichkeit und/oder deren Dienstgütequalität geändert hat, wobei vorzugsweise vor einer erneuten Ausführung des Schritts des Auswählens eines Kommunikationsmusters eine Wartezeit eingehalten wird. Durch die erneute (wiederholte) Ausführung des Auswahlschritts kann auch eine Flexibilität der Datenübertragung bei veränderten Randbedingungen erzielt werden. Durch das Vorsehen einer Wartezeit kann auch ein Oszillieren des Systems verhindert werden.

In einer weiteren bevorzugten Weiterbildung des Verfahrens ist vorgesehen, dass das Kommunikationsmuster die Nutzung einer Hilfskomponente zur Anpassung bzw. Adaption der Daten und/oder der durch die Daten kodierten Inhalte und/oder eines Datentransport-Containers einbezieht. Hilfskomponente realisiert entweder die Adaption der Dateninhalte oder des Datentransport-Containers.

In einer weiteren bevorzugten Weiterbildung des Verfahrens ist vorgesehen, dass die Eingangsdokumente der zweiten funktionalen Schicht auch gerätebezogene Informationen bezüglich des beteiligten Endgeräts enthalten.

In einer weiteren bevorzugten Weiterbildung des Verfahrens ist vorgesehen, dass die Eingangsdokumente der ersten funktionalen Schicht auch Informationen über externe Politiken enthalten. Externe Politiken können beispielsweise, aber nicht nur, reale Kosten oder virtuelle Kosten des Transports umfassen. Durch Einbeziehung solcher Politiken kann auch die Fairness unter den Nutzern des Transportnetzes gefördert werden.

In einer weiteren bevorzugten Weiterbildung des Verfahrens ist vorgesehen, dass die generischen Anforderungsdokumente einen Entscheidungsraum bilden, aus welchem durch die erste funktionale Schicht laufend geeignete bzw. am besten geeignete oder durch Politiken vorgegebene Transportressourcen ausgewählt werden, die über die zweite funktionale Schicht aus den gegenwärtigen Netzzugangsbedingungen abgeleitet und an die erste funktionale Schicht weitergeleitet werden.

Gemäß einem weiteren Gesichtspunkt der Erfindung wird eine Vorrichtung zur Ausführung des oben beschriebenen Verfahrens vorgeschlagen. Die Vorrichtung kann einen Server, insbesondere einen Medien-Download-Server oder einen Konferenzserver, und/oder ein insbesondere mobiles Endgerät und/oder eine Konferenzeinheit umfassen.

Ein weiterer Gesichtspunkt der Erfindung betrifft ein Computerprogramm, umfassend Programmbefehle, die einen Computer dazu veranlassen, die Verfahrensschritte des oben beschriebenen Verfahrens auszuführen, wenn das Computerprogramm auf den Computer geladen oder von diesem ausgeführt wird.

Ein weiterer Gesichtspunkt der Erfindung betrifft ein Softwareprodukt, das auf einem durch einen Computer lesbaren Medium gespeichert ist und das vorzugsweise direkt in den internen Speicher eines Computer geladen werden kann und das Programmcodes zur Durchführung des oben beschriebenen Verfahrens, wenn das Computerprogramm auf dem Computer ausgeführt wird, aufweist.

Ein weiterer Gesichtspunkt der Erfindung betrifft ein Digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des oben beschriebenen Verfahrens durchzuführen.

Diese Anmeldung offenbart somit eine automatisierte Steuerung dieser Schichten auf der Grundlage der tatsächlichen Netzbedingungen, d. h., Netzverfügbarkeit und Netzeigenschaften der verfügbaren Konnektivitäten. Die Erfindung wird durch ein Verfahren zur Übermittlung und Adaption von Daten und eine Vorrichtung zur Ausführung des Verfahrens verwirklicht. Die Erfindung kann auch durch ein Computerprogramm, umfassend Programmbefehle, die einen Computer dazu veranlassen, die Verfahrensschritte des beschriebenen Verfahrens auszuführen, wenn das Computerprogramm auf den Computer geladen oder von diesem ausgeführt wird, ein Softwareprodukt, das auf einem durch einen Computer lesbaren Medium gespeichert ist und das vorzugsweise direkt in den internen Speicher eines Computer geladen werden kann und das Programmcodes zur Durchführung der Verfahrensschritte des beschriebenen Verfahrens, wenn das Computerprogramm auf dem Computer ausgeführt wird, aufweist, und/oder ein digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des beschriebenen Verfahrens auszuführen, verkörpert sein.

Weitere Merkmale, Aufgaben, Vorteile und Einzelheiten der vorliegenden Erfindung werden aus der nachstehenden Beschreibung konkreter Ausführungsbeispiele und ihrer zeichnerischen Darstellung in den beigefügten Figuren noch deutlicher werden. Es versteht sich, dass Merkmale, Aufgaben, Vorteile und Einzelheiten einzelner Ausführungsbeispiele auf andere Ausführungsbeispiele übertragbar sind und auch im Zusammenhang mit den anderen Ausführungsbeispielen als offenbart gelten sollen, soweit dies nicht aus technischen oder naturgesetzlichen Gründen offensichtlich abwegig ist. In diesem Sinne können Merkmale verschiedener Ausführungsbeispiele grundsätzlich stets miteinander kombiniert werden, und die Kombination kann ebenfalls als Ausführungsbeispiel der Erfindung verstanden werden.

Im Folgenden wird die Erfindung anhand bevorzugter Ausführungsbeispiele und mit Hilfe von Figuren näher beschrieben. Dabei ist bzw. sind
- Fig. 1: ein schematisches Blockschaubild eines Systems gemäß der vorliegenden Erfindung;
- Fig. 2: eine schematische Darstellung einer Schichtstruktur mit einer netztoleranten Schicht gemäß der vorliegenden Erfindung;
- Fig. 3: ein Objektmodell der netztoleranten Schicht;
- Fig. 4: eine schematische Darstellung verschiedener Einflusskategorien auf den Entscheidungsprozess in der Schichtstruktur von Fig. 2;
- Fig. 5: einen Satz von generischen DPIDs (Decision Process Input Documents), die gemäß der vorliegenden Erfindung erzeugt werden;
- Fign. 6 bis 9: Datenstrukturen von Gerätedokumenten, eines Anforderungssatzes, von Netzkonfigurationen bzw. eines ausgewählten Teilsatzes von DPIDs, die gemäß der vorliegenden Erfindung verwendet werden; und
- Fign. 10A bis 10C: aufeinander folgende Abschnitte eines Sequenzdiagramms zur Veranschaulichung des erfindungsgemäßen Verfahrens gemäß einer Ausführungsform der vorliegenden Erfindung.

Die Figuren sind rein schematisch und nicht notwendigerweise maßstabsgetreu. Die zeichnerischen Darstellungen und Beschreibungen hiervon sind zur beispielhaften Veranschaulichung des Prinzips der Erfindung gedacht und sollen diese in keiner Weise einschränken.

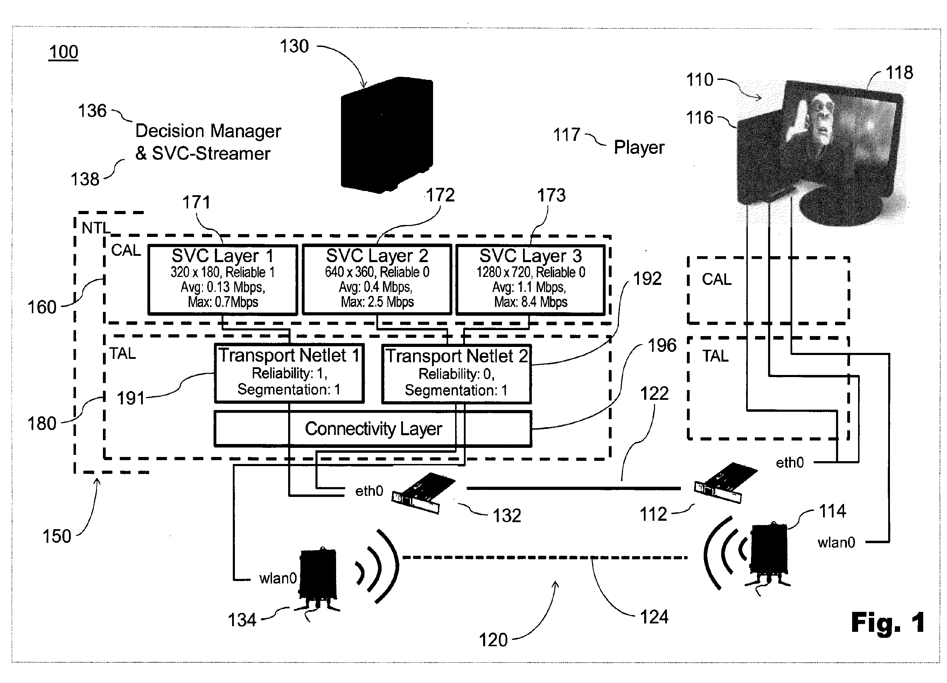

Fig. 1 zeigt ein schematisches Blockschaubild eines Systems, insbesondere Kommunikationssystems 100 gemäß einer Ausführungsform der vorliegenden Erfindung.

In dem Kommunikationssystem 100 ist ein Endgerät 110 über eine Netzumgebung 120 mit einem Server 130 verbunden. Insbesondere weist das Endgerät 110 eine Netzwerkkarte 112 sowie eine Funkschnittstelle (nicht näher dargestellt), die mit einem endgeräteseitigen WLAN- Einwahlknoten 114 eine Funkverbindung etabliert hat, auf. Andererseits weist der Server 130 eine Netzwerkkarte 132 sowie eine Funkschnittstelle (nicht näher dargestellt), die mit einem serverseitigen WLAN-Einwahlknoten 134 eine Funkverbindung etabliert hat, auf. Die Netzumgebung 120 weist ein kabelgebundenes Netz wie etwa Ethernet (eth) 122 und ein Funknetz wie etwa WLAN (wlan) 124 auf. Es ist die Erfindung indes nicht auf die dargestellten Netzarten und Protokolle beschränkt.

Das Endgerät 110 ist einem nicht näher dargestellten Benutzer zugeordnet und ist in der Lage, multimediale Inhalte wiederzugeben. In dem dargestellten Beispiel weist das Endgerät 110 eine Recheneinheit 116, die eine Wiedergabeanwendung (Player) 117 aufweist und mit einem Bildschirm 118 verbunden ist, auf. Die Recheneinheit 116 ist in diesem Beispiel als Kompakt-Arbeitsplatzrechner ausgestaltet, die Erfindung ist aber nicht hierauf beschränkt. Die Recheneinheit 116 kann auch als Laptop-Computer, Tablett-Rechner, Smartphone, Spielekonsole, als Teil einer HiFi-Anlage oder in jeder anderen geeigneten Art ausgestaltet sein. Insbesondere kann die Recheneinheit 116 einen integrierten Bildschirm aufweisen, sodass sie auf den externen Bildschirm 118 zur Wiedergabe von Mediendaten nicht angewiesen ist. Die Wiedergabeanwendung 117 kann als eine Funktionseinheit oder funktionale Instanz bezeichnet werden.

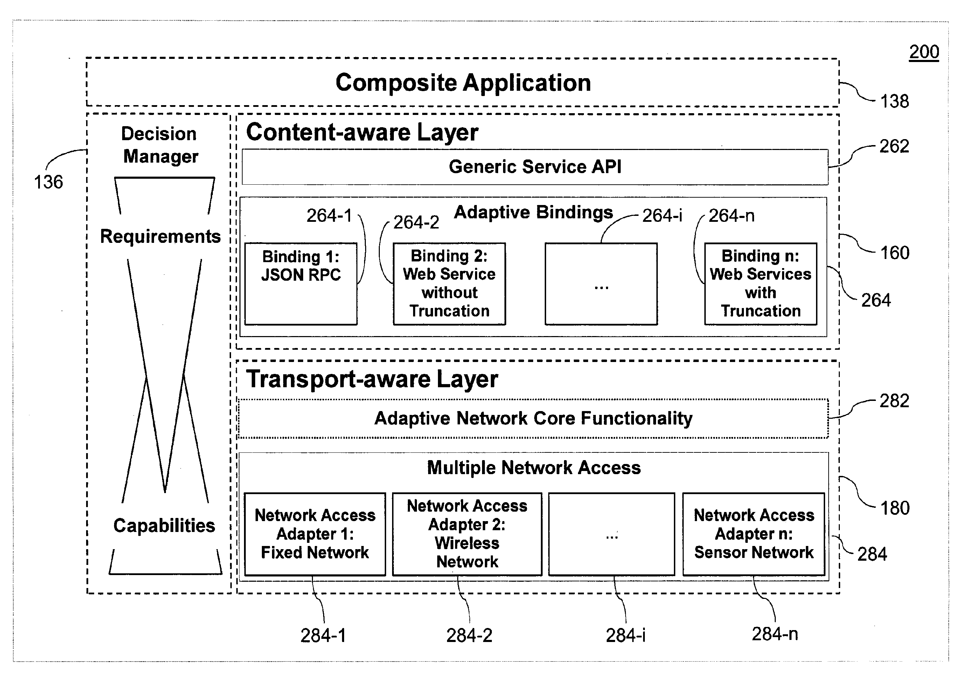

Der Server 130 ist entfernt von dem Endgerät 110 angeordnet und weist unter anderem einen Entscheidungsmanager (Decision Manager) 136 und eine SVC-Streamer-Anwendung 138 auf, die jeweils durch Software und/oder Hardware implementiert sein können. Der Entscheidungsmanager 136 und die Anwendung 138 können jeweils für sich oder in Kooperation auch als Funktionseinheit bzw. funktionale Instanz bezeichnet werden. Der SVC-Streamer 138 ist eine beispielhafte Multimedia-Anwendung und wird nachstehend vereinfachend auch als Anwendung 138 (auch "Composite Application" in Fign. 2, 4, 10A bis 10C) bezeichnet.

Somit ist das Endgerät 110 über mehrere Netzzugänge 122, 124 mit dem Server 130, der als eine Videoquelle fungiert, verbunden. Der Server 130 verteilt alle Schichten eines skalierbaren Video-Codecs (SVC). Ferner werden die Verfügbarkeit des Netzzugangs und dessen gegenwärtige individuelle Transportkapazität, -zuverlässigkeit und -qualität gemessen. Diese Information wird zu einer Funktionseinheit hin verbreitet, wobei etwa im vorliegenden Beispiel eines Video-Streaming die wahrgenommene Benutzererfahrung z. B. über das E-Modell gemäß ITU-T Recommendation G.107 unter Annäherung beispielsweise eines erwarteten Durchschnittsmeinungswerts (MOS - Mean Opinion Score) abgeschätzt wird.

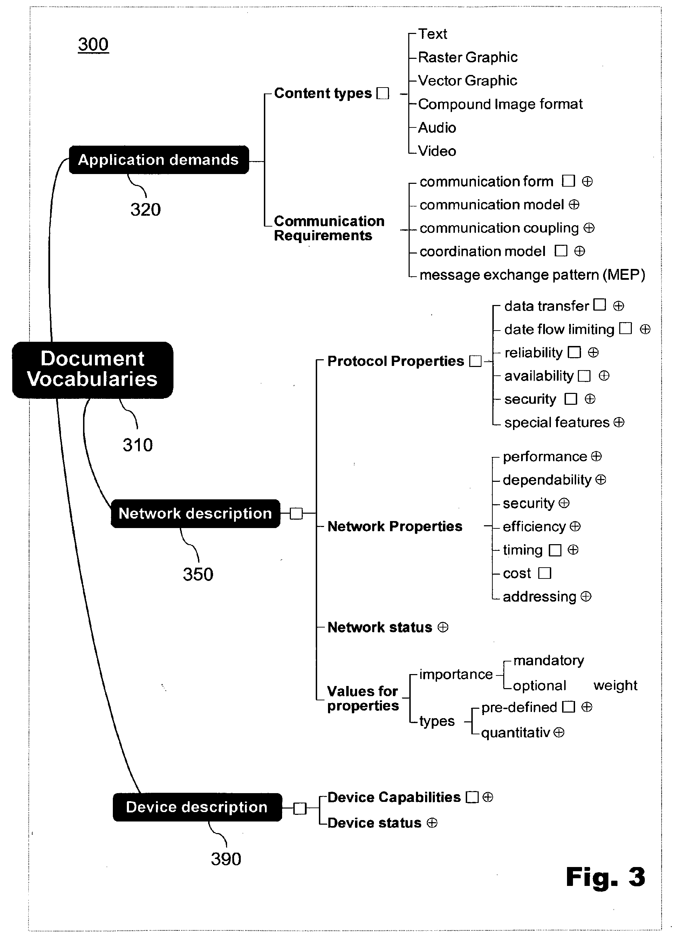

Für die Datenübertragung wird Gebrauch von einer netztoleranten Schicht (Network Tolerant Layer) NTL 150 gemacht. Die NTL 150 ist zwischen einer Software-Anwendungsschicht und einer Netzzugangsschicht integriert und weist zwei interagierende Subschichten 160, 180 (vgl. auch Fig. 2), die hier auch als funktionale Schichten bezeichnet werden, ein Objektmodell mit adaptiven Bindungen (vgl. auch Fig. 3) und eine Steuerinstanz auf.

Gemäß der Darstellung in Fig. 1 sind als eine obere Subschicht der NTL 150 eine inhaltsbewusste Schicht (Content-Aware Layer) CAL 160 und als eine untere Subschicht der NTL 150 eine transportbewusste Schicht (Transport-Aware Layer) TAL 180 vorgesehen. Die TAL 180 ist vorgesehen, um Datentransportfähigkeiten über heterogene Netze hinweg zu tragen, während die CAL 160 vorgesehen ist, um den übertragenen Dateninhalt gemäß dem Kontext von mobilen Geräten zu adaptieren. Die TAL 180 und die CAL 160 können ebenfalls als funktionale Einheiten verstanden werden.

Auf der Ebene der CAL 160 stehen gemäß der Darstellung in Fig. 1 drei Schichten eines skalierbaren Video-Codec (SVC - Scalable Video Codec) zur Verfügung, nämlich eine erste SVC-Schicht 171, eine zweite SVC-Schicht 172 und eine dritte SVC-Schicht 173, die wahlweise oder additiv verwendet werden können. Die SVC-Schichten 171, 172, 173 unterscheiden sich gemäß den Angaben in Fig. 1 durch ihre Bildauflösung, ihre Zuverlässigkeit (reliable) und ihre mittlere (Avg) sowie maximale (Max) Übertragungsrate. Auf der Ebene der TAL 180 stehen zwei Transport-Netlets 191, 192, die wahlweise oder additiv verwendet werden können, und eine Konnektivitätsschicht 196 zur Verfügung. Die Transport-Netlets 191, 192 unterscheiden sich durch ihren Zuverlässigkeitsgrad (Reliability) und ggf. ihren Segmentationswert (Segmentation). Die Konnektivitätsschicht 196 steuert einen Netzzugang (Network Access), indem sie die Verbindung sowohl mit der serverseitigen Netzwerkkarte 132 als auch - über die nicht näher dargestellte Funkschnittstelle - mit dem serverseitigen WLAN-Einwahlknoten 134 herstellt. Nach oben ist die Konnektivitätsschicht 196 mit beiden Transport-Netlets 191, 192 knüpft. Das erste Transport-Netlet 191, das einen hohen Zuverlässigkeitsgrad (1) aufweist, ist über die Subschichtgrenzen hinweg mit der ersten SVC-Schicht 171, die ebenfalls eine hohe Zuverlässigkeit (1) aufweist, und über die Konnektivitätsschicht 196 mit der Netzwerkkarte 132 des Servers 130 verbunden. Das zweite Transport-Netlet 192, das einen niedrigen Zuverlässigkeitsgrad (0) aufweist, ist über die Subschichtgrenzen hinweg mit der zweiten SVC-Schicht 172 und der dritten SVC-Schicht 173, die ebenfalls eine niedrige Zuverlässigkeit (0) aufweisen, und über die Konnektivitätsschicht 196 sowohl mit der Netzwerkkarte 132 des Servers 130 als auch mit der serverseitigen WLAN-Einheit 134 verbunden. Man beachte, dass das erste Transport-Netlet 191, das einen hohen Zuverlässigkeitsgrad aufweist bzw. verlangt, nicht über das WLAN-Netz wlan0 konnektierbar ist.

Auf der Senderseite (Server 130) empfängt die CAL 160 den kodierten geschichteten / multideskriptiven Datenstrom von der Anwendung 138. Die CAL 160 verfügt über genaue technische Informationen der Anwendung 138 und der verwendeten Codecs wie auch über den Einfluss der einzelnen Schichten/Beschreibungen auf die vom Benutzer wahrgenommene Qualität. Durch Prüfung des kodierten Stroms (Stream) identifiziert und trennt die CAL 160 die unterschiedlichen Schichten/Beschreibungen. Die getrennten Ströme (Streams) oder Aggregate werden Stück für Stück, zusammen mit Meta-Informationen, welche die Wichtigkeit der und Erfordernisse für die übermittelten Daten beschreiben, über jeweils eine der SVC-Schichten 171, 172, 173 an die TAL 180 weitergeleitet. Demgemäß ist die TAL 180 fähig, die Zahl übertragener Schichten/Beschreibungen auf der Grundlage der verfügbaren Netzzugänge 132, 134 und der gesamten verfügbaren Bandbreite dynamisch zu adaptieren. Ferner kann die Verteilung von hoch wichtigen Schichten/Beschreibungen durch Verwendung zusätzlicher Schutzmechanismen wie Neuübertragung oder Vorwärts-Fehlerkorrektur sichergestellt werden. Aufgrund der Trennung von Schichten/Beschreibungen der Anwendungsdaten sind zusätzliche Mechanismen vorgesehen, um eine Synchronisierung der Datenströme auf der Empfängerseite zu ermöglichen, um einen gültigen Datenstrom an die Anwendung weiterzugeben. Dies wird beispielsweise erreicht, indem eine zusätzliche Sequenznummer zu dem Stream an die TAL 180 vor jedem Stück hinzugefügt wird.

Auf der Empfängerseite (Endgerät 110) ist ein zusätzlicher Puffer vorgesehen, um die Synchronisierung der getrennten Datenströme und die Weitergabe eines gültigen Anwendungsschicht-Datenstroms zu ermöglichen. Dies kann der gleiche Datenstrom sein, der durch die sendende Anwendung 138 bereitgestellt wird, aber auch ein Datenstrom, in welchem Teile von Schichten oder ganze Schichten fehlen, entweder aufgrund einer Netzüberlastung oder von Entscheidungen in der TAL 180. Der präsentierte Ansatz verwendet auch einen neu sequenzierenden Puffer, welcher den Datenstrom auf der Grundlage der Sequenznummern der Datenstücke umsortiert. Da dieser Puffer eine zusätzliche Verzögerung einführt, ist er hinsichtlich Anwendungs- und Netzparametern dimensioniert.

Es wird nun anhand der Darstellung in Fign. 2 bis 5 eine allgemeinere Sicht auf die Prozeduren des erfindungsgemäßen Verfahrens, ihre zugrundeliegende Funktionalität und darauf, wie die Subschichten der NTL 150 unter der Steuerung des Entscheidungsmanagers (Decision Manager - DM) 136 interagieren, erläutert. Dabei ist der Entscheidungsmanager 136 als eine Software-Komponente innerhalb der NTL 150 zur Steuerung der beteiligten Subschichten (funktionalen Schichten) CAL 160 und TAL 180 zu verstehen.

Fig. 2 zeigt eine Schichtstruktur 200 mit der NTL 150 (Fig. 1) gemäß der vorliegenden Erfindung. Die Anwendungen (hier als "Composite Application" bezeichnet, beispielhaft die Anwendung 138 aus Fig. 1) verwenden eine der CAL 160 zugeordnete, generische Anwendungsprogrammierschnittstelle API 262 (API: Application Programming Interface), welche ihre Fähigkeitsoptionen und Erfordernisse bezüglich den Transportfähigkeiten unter Verwendung eines Satzes bzw. einer Gruppe von adaptiven Bindungsartefakten 264 (264-1 bis 264-n) mit Präferenzen transportieren. Die adaptiven Bindungsartefakte 264 sind Software-Komponenten, die ausgelegt sind, um zur Laufzeit einen Mechanismus zur Inhaltsadaption auszuwählen und auszuführen. Da sie durch den Entscheidungsmanager 136 verarbeitet werden, werden diese Artefakte 264 gemäß der vorliegenden Erfindung auch als "Entscheidungsprozess-Eingangsdokumente" (Decision Process Input Documents - DPID) bezeichnet. Die Hilfskomponente gemäß einer Ausführungsform der Erfindung (nicht dargestellt) ist in die Adaptive Bindings 264 integriert. Die in Fig. 2 gezeigte Schichtstruktur 200 wird auch als "Sillberg"-Architektur bezeichnet. Die Netzzugangsschicht liegt außerhalb der "Silfberg"-Architektur unterhalb des Entscheidungsmanagers 136 und der transportbewussten Schicht TAL 180. Die Netzzugangsschicht ist in Fig. 2 nicht dargestellt, da die einzelnen Netzwerkzugänge durch die Network Access Adapter 284-1 bis 284-n des multiplen Netzwerkzugriffs 284 (Multiple Network Access) repräsentiert werden. Die transportbewusste Schicht TAL 180 umfasst neben dem Multiple Network Access 284 eine adaptive Netzwerkkernfunktionalität 282 (Adaptive Network Core Functionality). Die Adaptive Network Core Functionality 282 hält unter Verwendung des Multiple Network Access 284 die Kernfunktionalitäten des Netzwerks hinsichtlich des Transports von Daten wie Sprache, Video, Text etc. aufrecht. Die Adaptive Network Core Functionality-Komponente des TAL verwaltet die aktuellen Transportfähigkeiten über vorhandene Netzwerkzugänge und leitet bei Verbindungsaufbau oder bei Veränderung der Verbindungen die angepassten Transporteigenschaftsdokumente als DPID des TAL in den Entscheidungsraum weiter und triggert so den Entscheidungsprozess des Entscheidungsmanagers aus Sicht des TAL. Die in Fig 1 dargestellte Konnektivitätsschicht (Connectivity Layer) 196 entspricht dem Multiple Network Access der Sillberg-Architektur und unterscheidet sich von der (nicht dargestellten) Netzzugangsschicht.

Fig. 3 zeigt ein Objektmodell 300 der NTL 150 mit Dokument-Vokabularien 310 in der vorstehend beschriebenen Sillberg-Architektur 310. Die Dokument-Vokabularien umfassen gemäß der Darstellung in Fig. 3 Anwendungsanforderungen 320, Netzwerkbeschreibungen 350 und Gerätebeschreibungen 390. Die Dokument-Vokabularien beschreiben die Anforderungen aus Sicht der Anwendungen sowie die Eigenschaften aus Sicht des Netzwerkzugangs und der Geräteeigenschaften, die in ihrer jeweiligen Ausprägung (DPIDs, Decision Process Input Documents) u.a. Basis für die Entscheidung in der oben beschriebenen Schichtstruktur 200 sind. Die generischen Anforderungsdokumente der Anwendungen und die die Transporteigenschaftsdokumente sowie die Geräteeigenschaftsdokumente sind die DPIPs. Die DPIDs bilden in Summe den Entscheidungsraum aus denen der Entscheidungsmanager den bestmöglichen Abgleich zwischen Anforderung und Transportfähigkeiten unter optionaler Anwendung von Politiken durchführt.

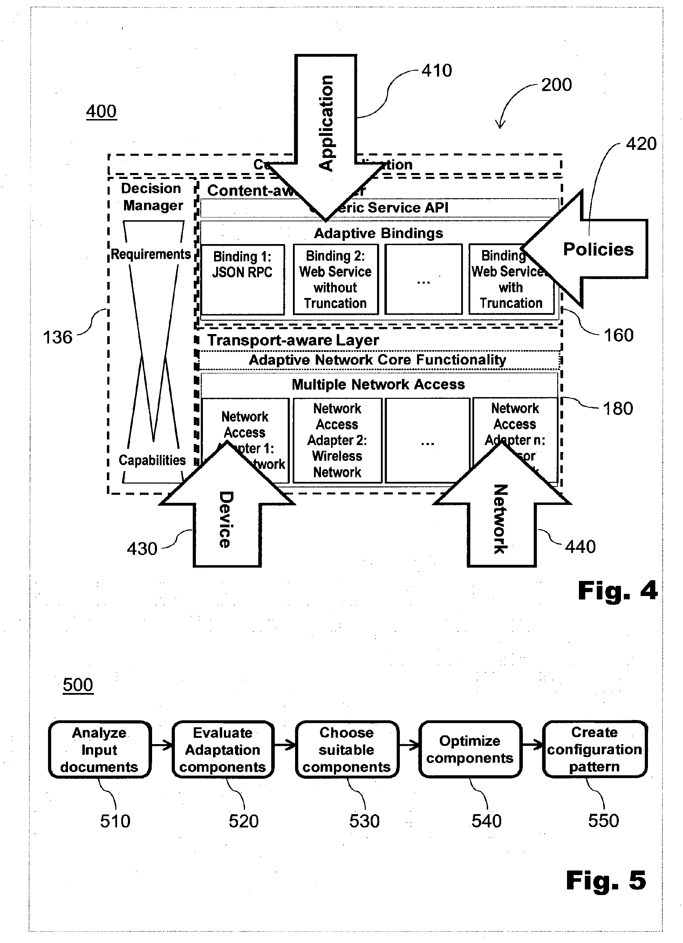

Fig. 4 zeigt ein Einflussschema 400 Von Einflussfaktoren bzw. Einflusskategorien auf den Entscheidungsprozess in der oben beschriebenen Schichtstruktur 200. Gemäß der Darstellung in Fig. 4 wird der Entscheidungsprozess des Entscheidungsmanagers 136 durch Anwendungsanforderungen und Politiken, deren sich die CAL 160 bewusst ist, und Geräte- und Netzparameter (Fähigkeiten und Zustände), deren sich die TAL 180 bewusst ist, beeinflusst. Diese Einflüsse werden als Anwendungsdokumente 410, Politikendokumente 420, Netzdokumente 430 und Gerätedokumente 440 bezeichnen und bilden die Eingangsdokumente (DPID) für den Entscheidungsprozess durch den Entscheidungsmanager 136. Es wird dabei vorausgesetzt, dass die CAL 160 keine Netzmechanismen, sondern ein Verhalten beschreibt.

Nachstehende Tabelle 1 veranschaulicht einen Satz von bekannten Adaptionsmechanismen bezüglich Nachrichten-/Stromkodierung ohne Inhaltsänderung in Abhängigkeit von Aspekten, die innerhalb der DPIDs spezifiziert sind. Diese Aspekte umfassen Anwendungsanforderungsdokumente (Application Demand Documents) bezüglich Inhaltstyp (Content Type) und Kommunikationserfordernissen (Communication Requirements), Netzwerkstatus (Network Status), Wichtigkeitshinweise (Importance Indications) und Gerätebeschreibungen (Device Descriptions) hinsichtlich Fähigkeiten und Status. Die letzteren werden vorzugsweise aus W3C CC/PP oder exemplarischen Spezifikationen der Open Mobile Alliance (OMA), z. B. für Wireless Application Protocol (WAP)-fähige Geräte angenommen.

In Tabelle 1 wird die erwartete Verbesserung in einer Antwortzeit im Vergleich mit SOAP/http/TCP (Expected response time Improvement compared to SOAP/http/TCP) bei verschiedenen Ansätzen (Approach) für mehrere Komponenten (Component) hinsichtlich einiger Aspekte (Aspect) und insgesamt zusammengefasst. Für die Komponente der Anwendung (Application) werden die Aspekte der Dienstrufabhängigkeit (Service call dependence) und der Dienstrufhäufigkeit (Service call frequency) betrachtet. Für die Komponente des Dienstes (Service) werden die Aspekte der Verarbeitungszeit (Processing time), der SOAP-Nachrichtengröße (SOAP message size) und der Datengröße/SOAP-Größe (Data size / SOAP size) betrachtet. Für die Komponente des Endgeräts (Device) wird der Aspekt der CPU-Leistung (CPU Power) betrachtet. Für die Komponente der Endgerät-Netzverbindung (Device-Network Connection) werden die Aspekte der Stabilität (Stability), des Paketverlusts (Packet loss), der Latenz (Latency) und der Bandbreite (Bandwidth) betrachtet. Der Vergleich erfolgt im Hinblick auf die Ansätze SOAP-over-UDP, SOAP-over-SCTP, zLib Compression, SOAP-over-WAP, SOAP-over TCP mit ständiger Verbindung (with persistent connection), SOAP-over-SMTP/POP3, Wireless SOAP, JAVA RMI, HHFR, MundoCore RMC und Schnellen Netzdiensten (Fast Web Services). Man beachte, dass für die jeweiligen Komponenten bzw. Aspekten nicht für alle Ansätze Vergleichswerte vorliegen.

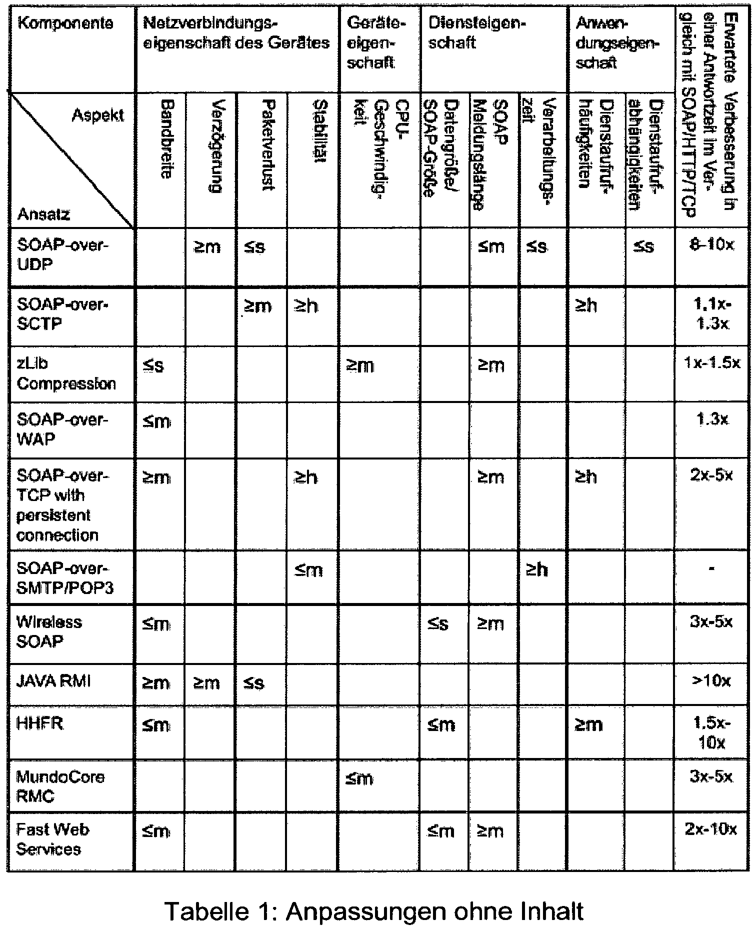

In Fig. 5 wird ein Satz bzw. eine Gruppe von generischen DPIDs 264 optional mit Alternativen durch die Anwendung 138, die gemäß der vorliegenden Erfindung gestaltet und durch den Entscheidungsmanager 136 verarbeitet wird, in Form einer Prozessschrittfolge 500 vorgestellt wie folgt: Analysiere eingegebene DPIDs (Schritt 510), evaluiere (Schritt 520), wähle, konfiguriere und verknüpfe Adaptionskomponenten (Adaption Components) (Schritt 530), optimiere die Komponenten (Schritt 540) und erzeuge einen sogenannten "Entscheidungsraum" (Decision Space), der aus einem Satz sogenannter "Kommunikationsmuster" (Communication Patters) besteht (Schritt 550). Die Kommunikationsmuster umfassen auch vorgeschriebene Sicherheitsschemata.

Auf der Grundlage von verfügbarer Netzkonnektivität und gemessener Dienstequalität (Quality-of-Service) des Netzes, die bereitgestellt werden, erzeugt die TAL 180 (genauer: die Software-Komponenten in der TAL 180) einen Satz von Transportnetzfähigkeitsdokumenten (Transport Network Capabilities Documents). Der Transport kann gemäß der vorliegenden Erfindung durch einen einzigen Netzzugangspunkt bzw. eine einzige Netzzugangstechnologie oder mittels einer Transportnetzüberlagerung bzw. -überschicht, welche einen oder mehrere Netzzugangs- und Transportprotokolle simultan überspannt, d. h., durch wirksames Einsetzen bestehender Technologien wie etwa SpOVnet:Ariba oder NENA, die eine flexible, komplementäre Transportprotokollbereitstellung ermöglichen, bereitgestellt werden.

Die adaptive Netzkernfunktionalität stellt als Teil der TAL 180 automatisch einen Satz von Transportfähigkeiten mit Qualitätsmaßen auf der Grundlage der gegenwärtigen Konnektivität bereit. Der Entscheidungsmanager 136 vergleicht die angegebenen Transportfähigkeiten und Sicherheitsmerkmale mit den Kommunikationsmustern gemäß ihrer Präzedenz und wählt die am besten passende Konfiguration, z. B. TLS, TCP, UDP, SCTP over UDP, IPSec, etc. aus.

Wenn der Netzzustand aufgrund veränderter Netzzugänge oder Netzbeeinträchtigungen sich ändert, wiederholt der Entscheidungsmanager 136 den Entscheidungsprozess durch Anpassen der identifizierten Kommunikationsmuster mit den gegenwärtigen Transportfähigkeiten. Dies kann die Involvierung von Adaptionsmechanismen auf der CAL, die dann für die Anwendung selbst transparent sind, umfassen. Die Reaktionszeit auf eine verlorene Netzkonnektivität ist im Vergleich mit Netzbeeinträchtigungen kritischer. Ein anderer Auslöser könnte eine gestartete oder gestoppte Anwendung, die mit dem Netzzugang konkurriert und erneuten Ausgleich und/oder Verkehrspriorisierung erfordert, sein. Zusätzlich muss eine minimale Nichtevaluierungsdauer oder Toleranzfrist definiert werden, um ein Oszillieren des Systems zu vermeiden.

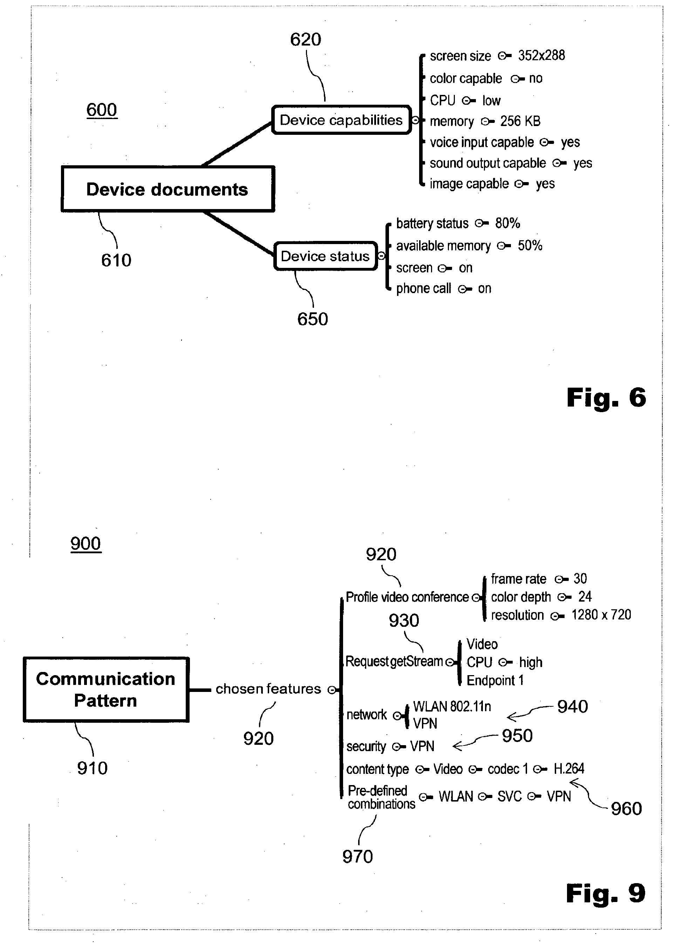

Anhand der Fign. 6 bis 9 wird nun ein Beispiel, wie die Eingangsdokumente und das gewählte Kommunikationsmuster aussehen können, beschrieben. Dieses Beispiel beansprucht keine Vollständigkeit; jedoch hilft es dabei, die Bedeutung und den strategischen Wert aller involvierten Dokumente und das Ergebnis des Entscheidungsprozesses zu verstehen.

In dem grundlegenden Szenario (vgl. auch Fig. 1) führt ein Benutzer eine NTLbasierte Video-Streaming-Anwendung 117 auf seinem mobilen Gerät aus. Die Anwendung unterstützt sowohl Video als auch Audio oder ein Standbild nur mit Audio. Dies hängt von den verfügbaren Netzen und ihren gegenwärtig verfügbaren Fähigkeiten wie etwa der Bandbreite ab. Zur Zeit der Auslösung des Entscheidungsprozesses sind zwei Netzwerke zur Auswahl durch den Entscheidungsmanager verfügbar.

Fig. 6 zeigt eine Datenstruktur 600, welche einen Satz von Gerätedokumenten 610 aufweist. Ein erstes Gerätedokument (Device Document) 610 beschreibt Gerätefähigkeiten (Device capabilities) wie etwa Bildschirmgröße, Wirkungsgrad der CPU, Gesamtspeicher, etc., und ein zweites Gerätedokument 650 beschreibt Gerätezustände (Device status) wie etwa Batteriestatus, verfügbaren Speicher und ob gegenwärtig ein Telefonruf ausgeführt wird. Ein Telefonruf würde Priorität gegenüber anderen Anwendungen aufweisen, da er eine Menge der Ressourcen des Geräts verbraucht und die vorherrschende Anwendung des Geräts ist. Die Gerätedokumente 620, 650 sind Beispiele des Gerätedokuments 430 in Fig. 4.

Die Anwendung stellt die Anwendungsdokumente, welche ihre Anforderungen und Forderungen beschreiben, bereit. In diesem Beispiel unterstützt die Anwendung drei alternative Anforderungssätze: minimal (minimum), gut (good) und zufriedenstellend (satisfactory). Damit die Anwendung arbeiten kann, müssen alle Anforderungen in dem Anforderungssatz "minimal" eingehalten werden, d. h., der Anforderungssatz "minimal" ist zwingend. In diesem Fall verwendet die Anwendung nur einen Audio-Stream mit einem Standbild. Die anderen zwei Anforderungssätze "gut" und "zufriedenstellend" sind optional.

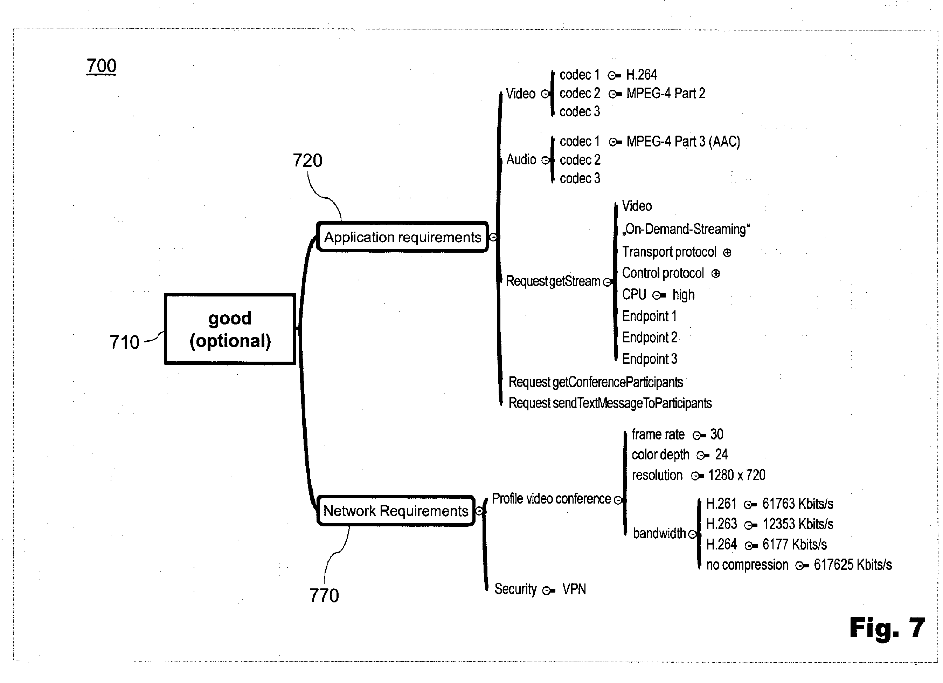

Fig. 7 zeigt eine Datenstruktur 700, welche den favorisierten Anforderungssatz "gut" 710 im Einzelnen aufweist. In diesem Fall unterstützt die Anwendung in einem Anwendungsanforderungsdokument (Application requirements) 720 die Inhaltstypen "Audio" und "Video" mit mehreren Codecs. Wenn die Anwendung einen Videoverteildatenstrom anfordert anfordert, wird der Stream die "Request getStream" verwenden, die mehrere Client-Endpunkte zugeordnet aufweist. In einem Netzanforderungsdokument (Network Requirements) 770 wählt die Anwendung beispielsweise ein vordefiniertes Profil namens "Videokonferenz" (Profile video conference) aus, welches einen bestimmten Satz von Anforderungen für eine Videokonferenzkonfiguration, welche die Anwendung unterstützt, beschreibt. Der Anforderungssatz "zufriedenstellend" ist in analoger Weise definiert. Die Anwendungsanforderungen 720 und Netzanforderungen 770 sind Beispiele des Anwendungsdokuments 410 in Fig. 4.

In diesem Moment seien zwei Netze verfügbar: "WLAN" und "GSM-GPRS-CS4-8 time slots". Die Fähigkeiten dieser Netze sind in vordefinierten Dokumenten beschrieben. Um die Anforderungen der Anwendung zu erfüllen, werden vordefinierte Protokollstapel beschrieben, aus welchen der Entscheidungsmanager auswählen wird.

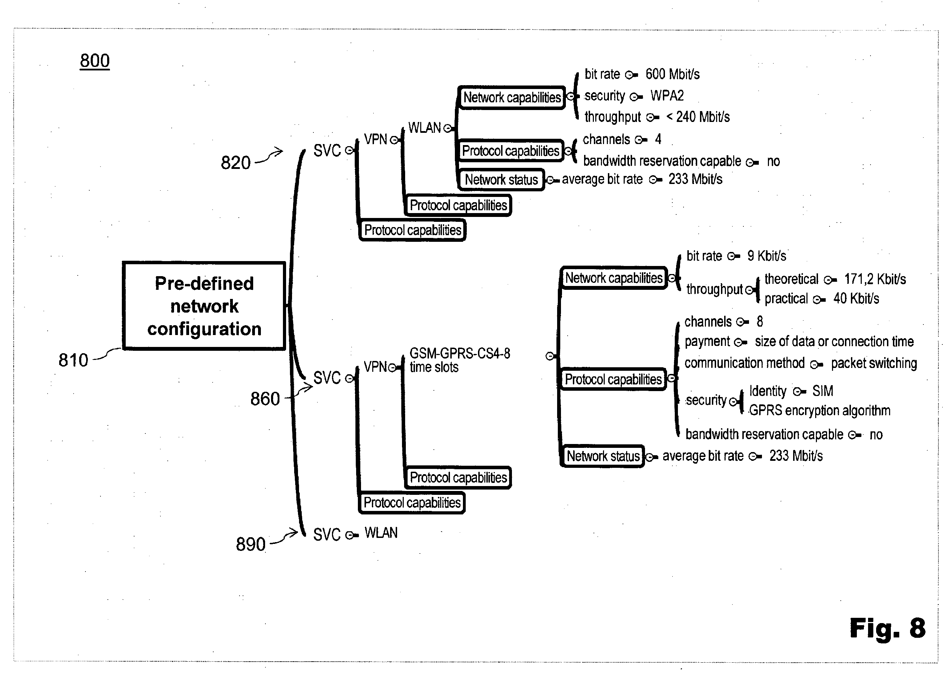

Fig. 8 zeigt eine Datenstruktur 800, welche einen Satz von Netzkonfigurationen 810 aufweist. Der Satz von Netzkonfigurationen 810 weist drei Netzkonfigurationen bzw. -protokollstapel 820, 860, 890 auf, die zum gegenwärtigen Zeitpunkt möglich sind.
- 820 bezeichnet eine Netzkonfiguration SVC über VPN über WLAN.
- 860 bezeichnet eine Netzkonfiguration SVC über VPN über GSM-GPRS-CS4-8 time slots.
- 890 bezeichnet eine Netzkonfiguration SVC über WLAN.

Für jede dieser Kombinationen 820, 860, 890 von Protokoll und Netzwerk wird es Dokumente geben, welche die Merkmale und Fähigkeiten beschreiben. Zusätzlich wird die NTL 150 Dokumente bereitstellen, welche den gegenwärtigen Status dieser Netze beschreiben; beispielsweise beträgt die durchschnittliche Bitrate der WLAN-Verbindung, die gerade eben gemessen worden ist, 233 Mbits/s (vgl. Figur 8, Zweig: SVC/VPNNVLAN/Network Status/average bit rate). Alle diese Dokumente sind Beispiele für das Netzdokument 440 in Fig. 4.

Der Entscheidungsmanager 136 wird herauszufinden haben, welche dieser Kombinationen 820, 860, 890 am besten geeignet ist, um die Anforderungen zu erfüllen. Beispielsweise verletzt die letzte Kombination 890 "SVC über WLAN" (SVC over WLAN) die durch die Anwendung geforderte Anforderung "VPN-Sicherheit (security VPN), und daher wird der Entscheidungsmanager diese Kombination nicht auswählen.

Zusätzlich wird für jedes Protokoll oder Netz deren Fähigkeiten spezifiziert sein bzw. werden, aber der Entscheidungsmanager 136 wird auch die kombinierten Werte zu evaluieren haben. Beispielsweise ist die theoretische Bandbreite von WLAN gegeben, aber in Kombination mit VPN wird die tatsächliche Bandbreite geringer sein.

Schließlich wird der Entscheidungsmanager ein geeigneten Subsatz oder Teilsatz (Subset) der verfügbaren Optionen vorschlagen. Fig. 9 zeigt eine Datenstruktur 900, welche eine mögliche Beschreibung des ausgewählten Teilsatzes 910 aufweist. Der Entscheidungsmanager hat das Profil "Videokonferenz" 920 (video conference) ausgewählt. Wenn die Anwendung "Request getStream" 930 ausführt, wird sie einen Video-Stream von dem Server mit "Endpoint 1" empfangen. Die teilnehmenden Netze und Protokolle sind: WLAN 940, VPN 950, und der Komprimierungsstandard ist SVC 970 (Erweiterung Annex G von H.264/MPEG-4 AVC: siehe 960).

Die Beschreibung in Fig. 9 gibt ein Beispiel an, wie das Ergebnis eines Entscheidungsprozesses aussehen kann. Dieses Ergebnis wird dann in ein Dokument umgewandelt, welches erforderliche Adaptionskomponenten, Netze, Protokolle, ihre Konfigurationen, chronologische Reihenfolge von Rufen etc. beschreibt.

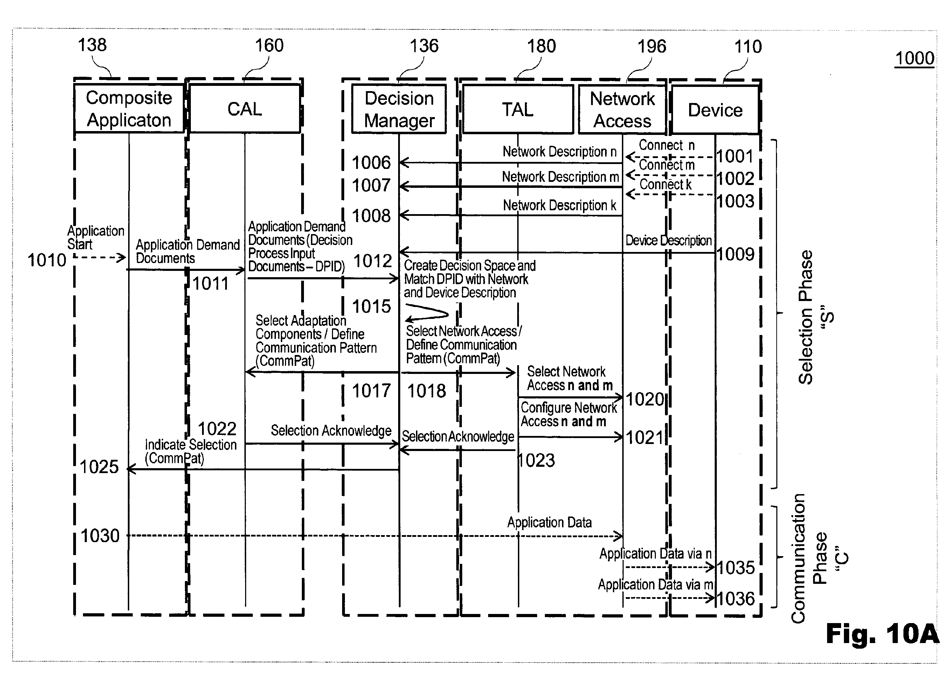

Die Aufteilung des Video-Datenstroms in der Funktionseinheit (Entscheidungsmanager 136, TAL 180, ggf. CAL 160) sowie die Zusammenführung und Synchronisation im Empfänger (Endgerät 110) werden weiter unten anhand eines Sequenzdiagramms, das in mehreren, aufeinander folgenden Teilen in Fign. 10A bis 10C gezeigt ist, im Einzelnen beschrieben.

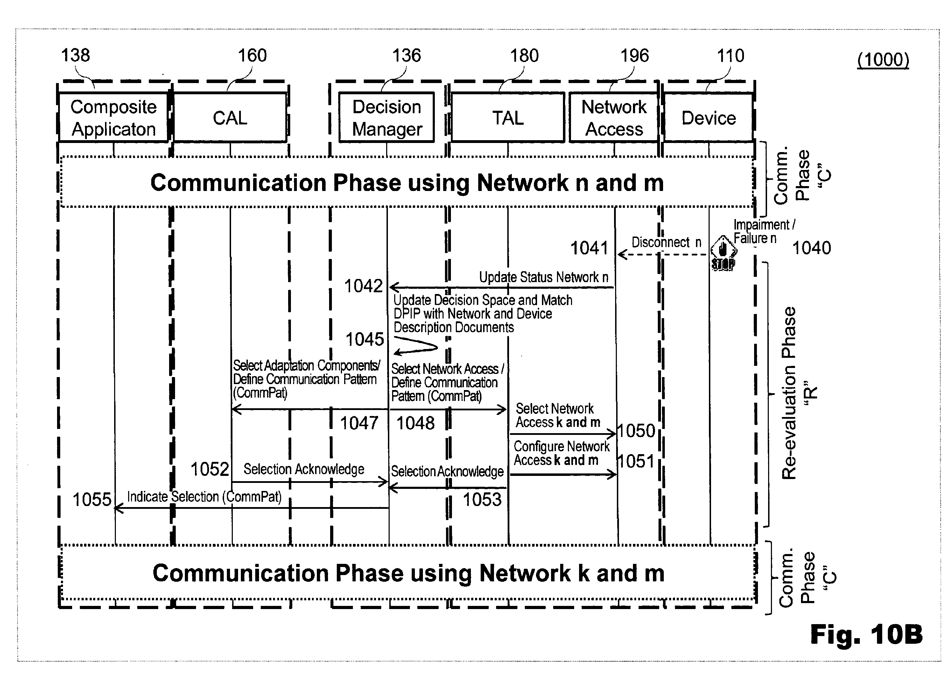

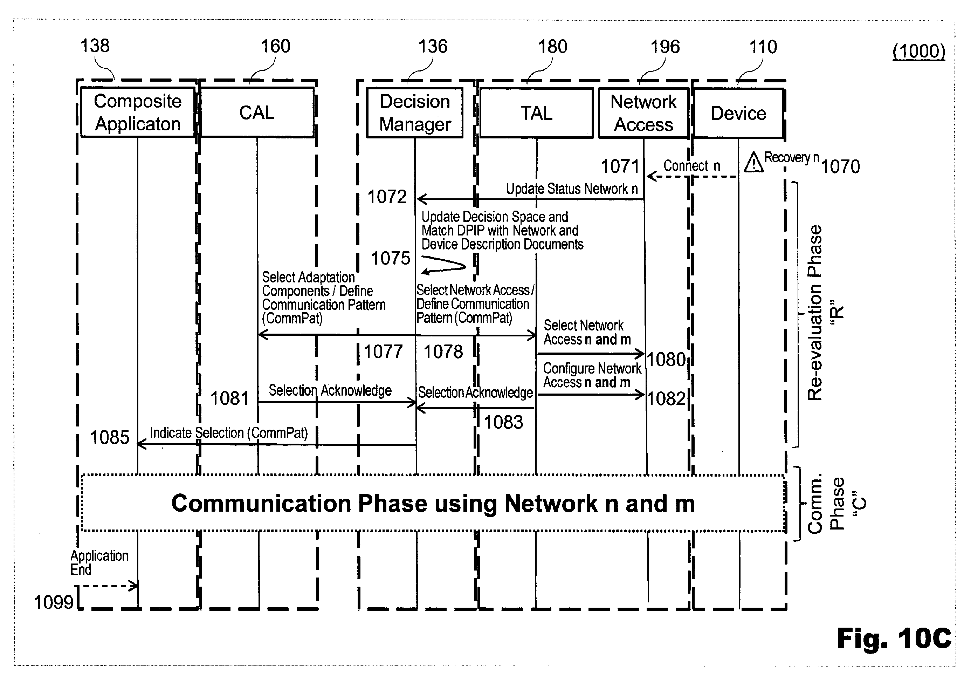

In Fign. 10A bis 10C ist ein erfindungsgemäßer Prozess 1000 gemäß einer Ausführungsform anhand eines Sequenzdiagramms in drei aufeinander folgenden Abschnitten dargestellt. Mit anderen Worten, der in Fig. 10A gezeigte Abschnitt des Prozesses 1000 wird von dem in Fig. 10B gezeigten Abschnitt gefolgt, und der in Fig. 10B gezeigte Abschnitt wird von dem in Fig. 10C gezeigten Abschnitt gefolgt. Die Verarbeitungsreihenfolge ist stets von oben nach unten.

Als Entitäten bzw. Instanzen sind die bereits erwähnten Komponenten der NTL-Architektur und deren Teilschichten dargestellt. Es wird angenommen, dass drei Netzzugänge n, m, k verfügbar sind. Wie in Fig. 1 dargestellt, terminieren die Verbindungen über 122, 124 an den Schnittstellen 112, 114.

Der Prozess 1000 beginnt mit einer Selektionsphase (Selection Phase) "S". Zunächst konnektiert das Gerät 110 mit der Konnektivitätsschicht (Netzzugang) 196 (Schritte 1001, 1002, 1003). Die Konnektivitätsschicht (Connectivity Layer) entspricht dem Multiple Network Access der in Fig. 2 dargestellten Sillberg-Architektur. "Network Access" steht für Multiple Network Access (siehe Fig. 2, Bezugszeichen 284). Diese leitet diese Information mit Informationen über die verfügbaren Netzzugänge n, m, k an den Entscheidungsmanager 136 weiter (Schritte 1006, 1007, 1008). Das Endgerät 110 selbst sendet eine Beschreibung eigener Fähigkeiten, Anforderungen und Parameter direkt an den Entscheidungsmanager 136 (Schritt 1009). Nach dem Start der Anwendung (Schritt 1010) und Übermittlung von deren Anforderungen (Schritt 1011) werden diese von der CAL 160 an den Entscheidungsmanager 136 weitergeben (Schritt 1012). Dieser vergleicht die Anforderungen der Anwendung mit denen der Netzzugänge (Schritt 1015) und selektiert daraus einige nutzbare Kommunikationsmuster (Communication Pattern) und sendet diese an beide kooperierende NTL-Teilschichten CAL 160 and TAL 180 (Schritte 1017, 1018). Funktional ist unter TAL 180 in den Figuren 10A bis 10C insbesondere die adaptive Netzwerkkernfunktionalität 282 (Adaptive Network Core Functionality) als Teil der TAL 180 gemäß Darstellung in Fig. 2 zu verstehen. Beispielhaft selektiert die TAL 180 nun die Netzzugänge n und m (Schritt 1020) und konfiguriert diese (Schritt 1021). Nach Bestätigung der Auswahl (Schritte 1022, 1023) erhält die Anwendung 138 das verwendete bzw. ausgewählte Kommunikationsmuster (Schritt 1025).

Daraufhin beginnt eine Kommunikationsphase (Communication Phase) "C" und die Anwendung 138 beginnt mit dem Senden der Nutzinformation (Schritt 1030). Die Konnektivitätsschicht 196 verteilt diese Informationen entsprechend über die Netzzugänge n und m (Schritte 1035, 1036). Da beide Netzzugänge n und m zur Verfügung stehen, können im vorliegenden Beispiel einer Video-Streaming-Anwendung die Anwendungsdaten (Application Data) etwa über eine Basisschicht und eine oder mehrere Erweiterungsschichten verteilt und daher mit erhöhter Video-Qualität übermittelt werden. Somit kann die Kommunikationsphase C unter Verwendung beider Netzzugänge n und m (Communication Phase using Network n and m), vgl. ab nun Fig. 10B, beispielsweise eine Kommunikationsphase mit erhöhter Video-Qualität sein. In anderen Anwendungen kann den beiden Netzzugänge eine andere Nutzungsaufteilung zugewiesen werden.

Während der Kommunikationsphase C führt die Konnektivitätsschicht 196 ständig wiederholte Aktualisierungen des Netzzustands durch und übermittelt diese an den Entscheidungsmanager 136 (nicht näher dargestellt). Über die Schnittstellenüberwachung stellt das Endgerät 110 eine Störung oder Qualitätsbeeinträchtigung der Netzwerkschnittstelle n fest (Schritt 1040). Daraufhin setzt eine Reevaluierungsphase (Re-evaluation Phase) "R" ein, die damit beginnt, dass das Endgerät 110 die Netzwerkschnittstelle n abschaltet (Schritt 1041). Daraufhin sendet die Konnektivitätsschicht 196 eine Aktualisierung des Netzzustandes an den Entscheidungsmanager 136 (Schritt 1042). Dieser bewertet die aktuelle Situation (Schritt 1045) und sendet nun mögliche Kommunikationsmuster an die kooperierenden NTL-Teilschichten CAL 160 und TAL 180 (Schritte 1047, 1048). Nun selektiert die TAL 180 die Netzzugänge k und m (Schritt 1050) und konfiguriert diese (Schritt 1051). Nach Bestätigung der Auswahl (Schritte 1052, 1053) erhält die Anwendung 138 das verwendete Kommunikationsmuster (Schritt 1055), und es setzt erneut eine Kommunikationsphase "C" ein. Obschon in der Figur nicht näher dargestellt, beinhaltet diese zunächst ein Senden der Nutzinformation an die Konnektivitätsschicht 196, woraufhin diese Informationen entsprechend über die Netzzugänge k und m verteilt werden. Da nur noch die Netzzugänge k und m zur Verfügung stehen, können weiterhin Anwendungsdaten über zwei Netzzugänge an das Endgerät 110 verteilt und dort wieder zusammengefügt werden. Da der Netzzugang k aber zuvor zugunsten des Netzzugangs n verworfen worden war (Auswahl in Schritt 1020), kann es sein, dass nun über die Netzzugänge k und m nur noch eine geringere Videoqualität übertragen wird oder eine geringere Ausfallsicherheit bereitgestellt werden kann oder andere Merkmale der Datenübertragung geringerwertig sind als bei der Übertragung über die Netzzugänge m und n.

Nach einer Weile ist, wie ab nun in Fig. 10C gezeigt, der Netzzugang n wieder stabil (Schritt 1070) und das Gerät (Endgerät) 1071 konnektiert in einer nun einsetzenden Reevaluierungsphase "R" wieder über diese Schnittstelle (Schritt 1071). Dies teilt die Konnektivitätsschicht 196 wiederum dem Entscheidungsmanager 136 mit (Schritt 1072). Dieser bewertet die aktuelle Situation (Schritt 1075) stellt auf Basis seines Wissens die ursprüngliche Nutzung der Konnektivität über den Netzzugang n und m wieder her (Schritte 1077 bis 1083 und 1085, die inhaltlich den Schritten 1017 bis 1023 und 1025 entsprechen), sodass auf eine erneute Erläuterung an dieser Stelle abgesehen werden kann. Der weitere Verlauf des Verfahrens entspricht nun wieder der Kommunikationsphase "C" unter Verwendung der Netze n und m, die oben bereits beschrieben wurde, sodass auf eine erneute Erläuterung an dieser Stelle ebenfalls abgesehen werden kann. Der Prozess 1000 endet mit dem Ende der Anwendung 138 (Schritt 1099).

Es wurde bereits erwähnt, dass die Erfindung nicht auf die zwei Netzarten Ethernet und WLAN beschränkt ist.

Es versteht sich außerdem, dass die Anwendung 138, die gemäß Darstellung in Fig. 1 in dem Server 130 verankert ist und gemäß Fign. 10A bis 10C Prozess- bzw.- Verfahrensschritte auf der Serverseite ausführt, auch auf den Server 130 und das Endgerät 110 verteilt oder in dem Endgerät 110 allein implementiert sein kann. In diesem Sinn können Teile der SVC-Streaming-Anwendung 138 des Servers 130 auch in der Wiedergabeanwendung 117 des Endgeräts 110 implementiert sein.

Die vorliegende Anmeldung ist nicht auf Video-Streaming-Anwendungen beschränkt. Als Anwendung im Sinne der vorliegenden Anmeldung kommen alle Anwendungen in Betracht, bei denen Daten über ein oder mehrere Netze übermittelt und adaptiert werden, in Betracht. Insbesondere eignet sich die vorliegende Erfindung für Videokonferenzanwendungen.

Unter Verwendung von mehr als einem Netzzugang gleichzeitig, z. B. fest und WLAN-Netz, fest und zellulär (HDSP, UMTS, LTE, ...), oder WLAN und zellulär, weist die Funktionseinheit gemäß dieser Erfindung auch die Flexibilität auf, die unterschiedlichen Schichten des skalierbaren Video-Codecs über unterschiedliche Netzzugänge gemäß den gegenwärtigen Netzbedingungen und -richtlinien zu leiten oder umzuleiten, um den Verkehr zu handhaben. Hierdurch ist die Funktionseinheit der Minimalerfordernisse für die Übertragung der unterschiedlichen SVC-Schichten ebenso wie der eingesetzten Verkehrsrichtlinien gewahr und bringt sie mit den tatsächlichen Netzbedingungen gemäß den Spektrumsmessungen in dem Band für die verfügbaren drahtlosen Netzzugänge in Übereinstimmung. Auf der Grundlage dieser Übereinstimmung entscheidet sie auch, wie viele (abhängige) Schichten zu dem Endpunkt übertragen werden, und ob zusätzliche Mechanismen zur Fehlerbeseitigung erforderlich sind.

Die Funktionseinheit wird unmittelbar über die Änderungen der tatsächlichen Netzbedingungen informiert und überprüft ihre Entscheidungen dementsprechend. Hierdurch übernimmt der Verlust, die Erholung oder die Instabilität eines Netzzugangs Vorrang gegenüber Netzqualitätsanzeichen. Die Funktionseinheit - wie durch diese Anmeldung offenbart - kann vorzugsweise in Abhängigkeit von der konkreten Netzkonfiguration jeweils auf einem Medienserver, einem Videokonferenzserver oder - falls unterschiedliche (administrative) Netzdomänen überspannt werden - einem "Traversal Using Relays around NAT"-(TURN)-Server, einem "Session Border Controller" (SBC), einem kombinierten Zugangsrouter/Anwendungsschicht-Gateway (ALG - Application Layer Gateway) oder einem "Media-Aware Network Element" (MANE) eingesetzt werden. Umgekehrt kann mit wachsender Verarbeitungsleistung von (mobilen) Geräten z. B. durch Multi-Core-Technologieren die Funktionseinheit auch dem Gerät, welches die in dieser Anmeldung offenbarte Technologie für interaktives Video oder Video-Upload eines zuvor erfassten Videos verwendet, innewohnen. Da die Funktionseinheit, die den Netzelementen innewohnt, wie vorstehend erwähnt, einen Überblick über die tatsächliche Gesamtverkehrssituation aufweisen kann, kann sie auch einen Lastausgleich berücksichtigen, um eine angemessene Verwendung von Netzressourcen über die Verbindungsvorrichtungen hinweg vorzusehen.

Mit dem vorstehend beschriebenen Verfahren ist ein dynamisches Umschalten von CODECS, STT / TTS (Text statt Sprache bei miserabler Verbindung), Call admission control (statisch), Mobility Proxies (HTML- Seiten komprimieren), SKYPE (baut mehrere TCP- Verbindungen auf) je nach aufgerufener Anwendung möglich.

Ein Umschalten von Codecs konzentriert sich hauptsächlich auf das Umschalten zwischen vergleichbaren Codec-Klassen wie etwa Video-Codecs. Die NTL geht über diese Klassenbeschränkung hinaus, indem sie nicht nur auf vergleichbare Codec-Klassen, sondern auch auf andere Codecs umschaltet, indem eine Inhaltsadaption bzw. -anpassung in einem weiteren Sinne verwendet wird. Beispielsweise kann eine Verschiebung von Video-Codecs zu Nur-Audio-Codecs (Audio-Only-Codecs) zu Textübertragung vorkommen, die dann später in einen TTS-Prozessor eingegeben werden kann. Zusätzlich kann die Anwendung die Adaptionsoptionen hinsichtlich ihrer eigenen Fähigkeiten und hinsichtlich anwendungsspezifischer Prioritäten zur Inhaltsadaption einschließlich Modalitätsumwandlungstechniken beeinflussen. Die Inhaltsqualität kann nicht nur reduziert werden, sondern kann auch hochgestuft werden, wenn bessere Verbindungsoptionen verfügbar werden.

Auf der Netzebene ermöglicht die netztolerante Schicht eine Adaption der Kommunikation hinsichtlich Anwendungsanforderungen und Netzfähigkeiten ohne eine explizite Verbindungsauswahl durch die Anwendung, was dem Entscheidungsmanager ermöglicht, aus verfügbaren Verbindungen die am besten geeignete, aber nicht zwingend beste, Verbindung auszuwählen. Um den Entscheidungsprozess zu beeinflussen, können Politiken von Benutzern oder Firmen eingeführt werden und ermöglichen sogar eine Adaption in Richtung im Hinblick auf Anliegen von Preisbildung bzw. Kostengestaltung, Lastausgleich, Verkehrsentlastung, die nur auf der Infrastrukturebene, aber nicht auf der Ebene des individuellen Benutzer-Endgeräts bekannt sind. Derartige Politiken können als Politikendokument 420 in Fig. 4 Eingangsgrößen bzw. -dokumente (DPID) für die Schichtarchitektur 200 sein. Außerdem ermöglicht die Überlagerung eine Übergabe zwischen unterschiedlichen Verbindungstechnologien (sogar solchen, die selbst eine Übergabe nicht unterstützen) in der NTL 150, ohne die Anwendung zu beeinflussen.

Die in Bezug auf die dargestellten Ausführungsformen und -beispiele beschriebenen Merkmale der Erfindung können auch bei anderen Ausführungsformen der Erfindung vorhanden sein, außer wenn es anders angegeben ist oder sich aus technischen Gründen von selbst verbietet.

## Patentansprüche

1. Verfahren zur Übermittlung und Adaption von Daten, insbesondere Mediendaten, Multimediadaten und/oder Echtzeitkommunikationsdaten, unter Beteiligung eines mobilen Endgeräts, mit den Schritten:
a) Erzeugen von generischen Anforderungsdokumenten;
b) Identifizieren einer Menge von geeigneten Kommunikationsmustern auf der Grundlage der generischen Anforderungsdokumenten;
c) Ermitteln aktuell verfügbarer Transportmöglichkeiten und deren Dienstgütequalität über wenigstens ein Kommunikationsnetz;
d) Auswählen eines Kommunikationsmusters aus der Menge von geeigneten Kommunikationsmustern auf der Grundlage der Netzübertragungsgüte/-n des wenigstens einen Kommunikationsnetzes,
wobei das Verfahren eine erste funktionale Schicht und eine zweite funktionale Schicht nutzt, die zwischen einer Software-Anwendungsschicht und einer Netzzugangsschicht integriert werden und jeweils voneinander unabhängige Eingangsdokumente erhalten, wobei die Eingangsdokumente der zweiten funktionalen Schicht transportbezogene Informationen enthalten, während die Eingangsdokumente der ersten funktionalen Schicht anwendungsbezogene Informationen enthalten.

2. Verfahren gemäß Anspruch 1, **dadurch gekennzeichnet, dass** der Schritt des Auswählens eines Kommunikationsmusters erneut ausgeführt wird, wenn festgestellt wird, dass sich die verfügbare Transportmöglichkeit und/oder deren Dienstgütequalität geändert hat, wobei vorzugsweise vor einer erneuten Ausführung des Schritts des Auswählens eines Kommunikationsmusters eine Wartezeit eingehalten wird.

3. Verfahren gemäß Anspruch 1 oder 2, **dadurch gekennzeichnet, dass** das Kommunikationsmuster die Nutzung einer Hilfskomponente zur Anpassung der Daten und/oder der durch die Daten kodierten Inhalte und/oder eines Datentransport-Containers einbezieht.

4. Verfahren gemäß einem der vorstehenden Ansprüche, **dadurch gekennzeichnet, dass** die Eingangsdokumente der zweiten funktionalen Schicht auch gerätebezogene Informationen bezüglich des beteiligten Endgeräts enthalten.

5. Verfahren gemäß einem der vorstehenden Ansprüche, **dadurch gekennzeichnet, dass** die Eingangsdokumente der ersten funktionalen Schicht auch Informationen über externe Politiken enthalten.

6. Verfahren einem der vorstehenden Ansprüche, **dadurch gekennzeichnet, dass** die generischen Anforderungsdokumente einen Entscheidungsraum bilden, aus welchem durch die erste funktionale Schicht laufend am besten geeignete oder durch Politiken vorgegebene Transportressourcen ausgewählt werden, die über die zweite funktionale Schicht aus den gegenwärtigen Netzzugangsbedingungen abgeleitet und an die erste funktionale Schicht weitergeleitet werden.

7. Vorrichtung (110, 130) zur Ausführung des Verfahrens nach einem der vorstehenden Ansprüche, wobei die Vorrichtung vorzugsweise einen Server, insbesondere einen Medien-Download-Server oder einen Konferenzserver, und/oder ein insbesondere mobiles Endgerät und/oder eine Konferenzeinheit umfasst.

8. Computerprogramm, umfassend Programmbefehle, die einen Computer dazu veranlassen, die Verfahrensschritte des Verfahrens nach einem der Ansprüche 1 bis 6 auszuführen, wenn das Computerprogramm auf den Computer geladen oder von diesem ausgeführt wird.

9. Softwareprodukt, das auf einem durch einen Computer lesbaren Medium gespeichert ist und das vorzugsweise direkt in den internen Speicher eines Computer geladen werden kann und das Programmcodes zur Durchführung des Verfahrens nach einem der Ansprüche 1 bis 6, wenn das Computerprogramm auf dem Computer ausgeführt wird, aufweist.

10. Digitales Speichermedium mit elektrisch lesbaren Steuersignalen, welche mit einem programmierbaren Computer arbeiten können, um Kommunikationsvorgänge zu verwalten, wobei die Steuersignale ausgelegt und angepasst sind, den Computer zu veranlassen, die Verfahrensschritte des Verfahrens nach einem der Ansprüche 1 bis 6 durchzuführen.
